# EUROPEAN PATENT SPECIFICATION

(11) **EP 3 569 686 B1**
(45) Date of publication and mention of the grant of the patent: **07.10.2026**
(21) Application number: 17832193.1
(22) Date of filing: 20.12.2017
(51) Int. Cl.: C12G 1/00, C12F 3/06, C12G 3/06

(54) **DEVICE FOR RECOVERING AROMAS FROM FERMENTATION VATS**
EQUIPO RECUPERADOR DE AROMAS DESDE CUBAS FERMENTATIVAS
ÉQUIPEMENT RÉCUPÉRATEUR D'ARÔMES À PARTIR DE CUVES DE FERMENTATION

(30) Priority: 29.12.2016 CL 20163386
(43) Date of publication of application: 20.11.2019
(73) Proprietor: Pontificia Universidad Católica de Chile, Santiago Centro, Santiago (CL); Sociedad Anónima Viña Santa Rita, Las Condes, Santiago (CL); Dictuc S.A., Santiago (CL)
(72) Inventor: PÉREZ CORREA, José Ricardo, Santiago (CL); CÁRCAMO BEHRENS, Martín Rodrigo, Santiago (CL); CONCHA MUÑOZ, Camilo Andrés, Santiago (CL); ALEMPARTE BENAVENTE, Eduardo Andrés, Santiago (CL); BENAVENTE PEREIRA, José Miguel, Santiago (CL); HEIREMANS BUNSTER, Jorge Alberto, Santiago (CL); AGOSÍN TRUMPER, Eduardo Esteban, Santiago (CL)
(74) Representative: Garcia González, Sergio
(86) International application number: PCT/CL2017/050080
(87) International publication number: WO 2018/119533

(56) References cited:
- DE-C1- 10 018 096
- US-A- 4 908 219
- US-A- 5 385 647
- US-A1- 2016 265 814

## Description

### FIELD

The present invention relates to the aromatic industry, in particular the extraction of aroma from exhausted gases from fermentation vats.

### BACKGROUND

The recovery of aromas from fermentation gases can be carried out, for example, as described in the patent document US 3,852,477, by passing the fermentation gases through filters with activated carbon, which is subsequently desorbed in particular, in a process of elaboration of enriched wine. A process of recovery of aroma constituents from a vinification process is disclosed in patent document US4908219A.

However, the absorption technique for aroma recovery has the disadvantage of a possible saturation of the absorption liquid *(Yanniotis et al., 2007).* In addition, the absorption liquids require special handling. Other problems associated with this technique are the recovery product contamination and the degradation of aromatic molecules in the process *(Karlsson and Trägard, 1997)*. Therefore, the aromatic recovery using absorption liquids is problematic in the wine industry, and it is contrary to certain laws in some regions of the world (for example, in Chile, where only natural flavorings without additives can be added to wine).

Another technique for the recovery of aromas is disclosed in DE10018096 which describes a device through which fermentation gases are passed comprising 2 or 3 connected condensers in series with temperatures of 0 °C and -20 °C or 0 °C, -15 °C and -30 °C respectively. However, some control means or mechanism to avoid freezing in the equipment is not included or described, leaving this technical difficulty in the choice of the design for each condenser.

On the other hand, it has been surprisingly found in the aroma recovery from fermentation vats for wines, that a considerable volume of aroma recovery can be obtained, at even lower temperatures than those used in the prior art, for example, in a process of recovery in 2 condensers operating at 0 °C and - 40 °C respectively. For example, a recovery at -40 °C with a volume of condensate corresponding to 75% of the volume recovered at 0 °C (0,8 ± 0,2 mL / L of must) has been observed. A better performance of the aroma recovery is projected as the temperature of the condensers decreases, generating a deeper cold in both stages of recovery, that is, it is sought performing a recovery of aromas with two stages of condensation at temperatures lower than 0 °C and - 40 °C respectively.

In order to be able to perform a high performance of aroma recovery in two stages, an aroma recovery equipment is needed which can effectively prevent freezing problems in the equipment and achieve a temperature lower than 0 °C and - 40 °C in both stages of condensation.

### TECHNICAL SOLUTION

The present invention allows a recovery of aromas in two stages, where the cold generated in both stages is controlled in a coordinated way so that deep cooling is achieved without risk of freezing in the equipment.

### SUMMARY

The present invention consists of a aroma recovery equipment from exhausted gases from fermentation vats, wherein it comprises: a first recovery group (100) comprising a first condenser (110) operating at a first outlet gas temperature between 0 °C and - 15 °C and receiving the exhausted gases from fermentation vats, it condenses the aromas into a liquid recovered by an aroma outlet (111) for storing and then exhaust gases exhausted by a gas outlet (112) of the first recovery group (100), wherein said first recovery group (100) includes said first condenser (110) connected to a heat exchanger (120) connected to a pump (130) connected to a fluid tank (140) connected to said first condenser (110), forming a first cooling cycle operating with a first cooling fluid (101) withdrawing heat from the first condenser (110); a second recovery group (200) comprising a second condenser (210) operating at a second outlet gas temperature between - 40 °C and - 60 °C and receives the gas exhausted from the gas outlet (112) of the first recovery group (100), it condenses aromas in a liquid recovered by a second output of aromas (211) for storing and then evacuates the gases exhausted from a gas outlet (212) of the recovery equipment, wherein said second recovery group (200) includes said second condenser (210) connected to a second heat exchanger (220) connected to a pump (230) connected to a fluid tank (240) connected to said second condenser (210), forming a second cooling cycle operating with a second cooling fluid (201) withdrawing heat from the second condenser (210); a cooling group (300) to provide cold by a cooling fluid (301) to said first recovery group (100) via a first fluid connection means (302) and to said second recovery group (200) via a second fluid connection means (303); and control means (400) configured to coordinately control the temperature of said first recovery group (100) and the temperature of said second recovery group (200); and a housing with displacement means such as wheels.

### ADVANTAGES OF THE INVENTION

The present invention allows a aroma recovery from fermentation vats, allowing multiple connections for large volumes of fermenting liquids by a compact and mobile equipment, simple of use and great versatility for varying and controlling the conditions of operation and also facilitating their maintenance.

The present invention allows a highly efficient aroma recovery through two condensation stages, achieving a deep cold without risk of freezing in the equipment.

### BRIEF DESCRIPTION OF THE DRAWINGS

Figure 1 shows a flowchart of one embodiment of the aroma recovery equipment according to the present invention.
Figure 2 shows a flowchart of another embodiment of the aroma recovery equipment according to the present invention.

### DETAILED DESCRIPTION OF THE INVENTION

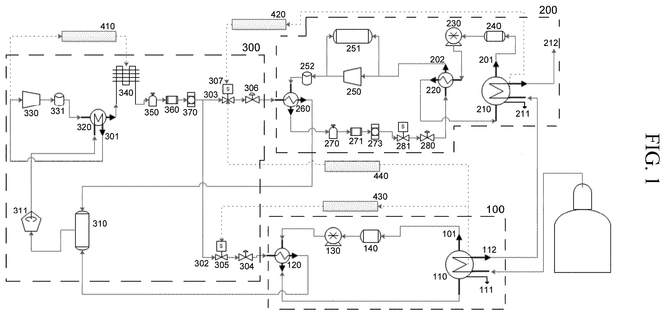

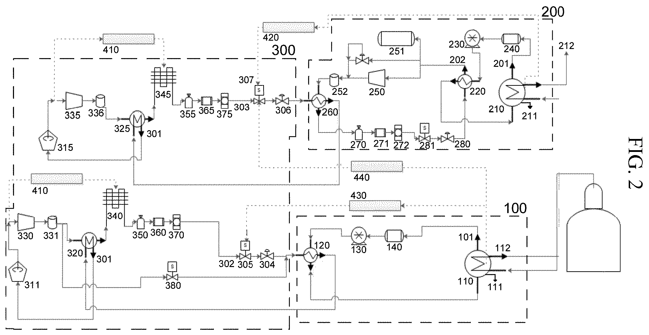

The exemplary and exemplary embodiments of the present invention are described below and with reference to Figures 1 and 2, where preferred examples are given for an embodiment of an aroma recovery equipment from exhausted gases from fermentation vats, consisting mainly of CO₂ and at a temperature between 10 °C and 30 °C.

The present invention consists of aroma recovery equipment from exhausted fermentation vats comprising:
A first recovery group (100) comprising a first condenser (110) operating at a first outlet gas temperature between 0 °C and - 15 °C and receiving the exhausted gases from fermentation vats, it condenses the aromas into a liquid recovered by an aroma outlet (111) for storing and then exhaust gases exhausted by a gas outlet (112) of the first recovery group (100), wherein said first recovery group (100) includes said first condenser (110) connected to a heat exchanger (120) connected to a pump (130) connected to a fluid tank (140) connected to said first condenser (110), forming a first cooling cycle operating with a first cooling fluid (101) withdrawing heat from the first condenser (110);
A second recovery group (200) comprising a second condenser (210) operating at a second outlet gas temperature between - 40 °C and - 60 °C and receives the gas exhausted from the gas outlet (112) of the first recovery group (100), it condenses aromas in a liquid recovered by a second output of aromas (211) for storing and then evacuates the gases exhausted from a gas outlet (212) of the recovery equipment, wherein said second recovery group (200) includes said second condenser (210) connected to a second heat exchanger (220) connected to a pump (230) connected to a fluid tank (240) connected to said second condenser (210), forming a second cooling cycle operating with a second cooling fluid (201) withdrawing heat from the second condenser (210);
A cooling group (300) to provide cold by a cooling fluid (301) to said first recovery group (100) via a first fluid connection means (302) and to said second recovery group (200) via a second fluid connection means (303);
Control means (400) configured to coordinately control the temperature of said first recovery group (100) and the temperature of said second recovery group (200); and
A housing with displacement means such as wheels.

Preferably, said cooling fluid (301) may be Freon R404 or R507 type (or similar as ammonium, CO₂, etc.).

According to one aspect of the invention, said first fluid connection (302) of the cooling group (300) comprises a first expansion valve (304) connected to said first condenser (110) which is a flooded type and is cooled down by the expansion of the cooling fluid (301) in said first condenser (110), wherein said first expansion valve (304) is electronic and controlled by said control means (400).

Alternatively, said first fluid connection (302) of the cooling group (300) comprises a first control solenoid valve (305) and a first expansion valve (304) connected in series to said first condenser (110) which is a flooded type and is cooled down by expansion of the cooling fluid (301) into said first condenser (110), wherein said first control solenoid valve (305) is controlled by said control means (400).

The first recovery group (100) includes said first condenser (110) connected to a heat exchanger (120) connected to a pump (130) connected to a fluid tank (140) connected to said first condenser (110) forming a first cooling cycle operating with a first cooling fluid (101) withdrawing heat from the first condenser (110).

For example, said first cooling fluid (101) is glycol, propylene glycol or ethanol, said first condenser (110) is a tube and shell type of exchanger, said first heat exchanger (120) is a plate exchanger, said pump (130) is a peripheral pump of 0.5 hp [0.37 kW] and a flow rate of 20 to 30 L / min., of stainless steel and connected to said tank (140) which is a tank of stainless steel or other inert material, with a capacity up to 5 liters.

For example, said first condenser (110) admits a cold fluid which is at a temperature of -15 °C at its inlet, wherein said cold fluid is said first cooling fluid (101) of the first cooling cycle or said cooling fluid (301) of the cooling group (300).

According to a preferred aspect of the invention, said first fluid connection (302) of the cooling group (300) comprises a first control solenoid valve (305) and a first expansion valve (304) connected in series to the first exchanger (120) of the first recovery group (100), delivering the cooling fluid (301) by expanding in the first heat exchanger (120) to withdraw heat from said first recovery group (100), wherein said first control solenoid valve (305) is controlled by said control means (400).

Alternatively, said first fluid connection (302) of the cooling group (300) comprises a first expansion valve (304) connected to the first heat exchanger (120) of the first recovery group (100), delivering the cooling fluid (301) expanding into the first heat exchanger (120) to withdraw heat from the first recovery group (100), wherein said first expansion valve (304) is electronic and is controlled by said control means (400).

Preferably, the expansion valve (304) is a manual valve.

The second outlet gas temperature of the second condenser (210) is between -40 °C and -60 °C, preferably about -50 °C.

According to one aspect of the invention, said second fluid connection (303) of the cooling group (300) comprises a second expansion valve (306) connected to said second condenser (210) which is a flooded type and is cooled with the expansion of the cooling fluid (301) in said second condenser (210), wherein said second expansion valve (303) is electronic and controlled by said control means (400).

Still alternatively, said second fluid connection (303) of the cooling group (300) comprises a second control solenoid valve (307) and a second expansion valve (306) connected in series to said second condenser (210) which is a flooded type and is cooled with the expansion of the cooling fluid (301) into said second condenser (210), wherein said second control solenoid valve (307) is electronic and controlled by said control means (400).

The second recovery group (200) includes said second condenser (210) connected to a second heat exchanger (220) connected to a pump (230) connected to a fluid tank (240) connected to said second condenser (210) forming a second cooling cycle operating with a second cooling fluid (201) withdrawing heat from the second condenser (210).

For example, said second cooling fluid (201) is ethanol or silicone oil of methyl phenyl or simile, said second condenser (210) is a tube and shell type exchanger, said second heat exchanger (220) is an exchanger, said pump (230) is a stainless steel peripheral pump of 0.5 to 1 hp [0.37-0,74 kW] and a flow rate of 20 to 30 L / min. and connected to said tank (240) which is a stainless steel tank with a capacity of up to 5 liters.

For example, said second condenser (220) admits a cold fluid at a temperature between -45 °C and -60 °C at its inlet, according to a preferred aspect, said cold fluid is at a temperature of -55 °C and more preferably, said fluid is at a temperature of -60 °C, wherein said cold fluid is said second cooling fluid (201) of the second cooling cycle or said cooling fluid (301) of the cooling group (300).

According to a preferred aspect of the present invention, said second recovery group (200) further comprises a compressor (250) and an expansion tank (251) in parallel, connected on one side to the second heat exchanger (220) and on the other side to a liquid / oil separator (252) connected to a third heat exchanger (260) connected to a liquid accumulator (270) connected to a dehydrating filter (271) connected to a liquid visor (272) connected to a control solenoid valve (280) connected to an expansion valve (281) connected to said second heat exchanger (220) forming a cascade refrigerant cycle operating with a cascade refrigerant fluid (202) that withdraws heat from the second cooling cycle.

Alternatively, said cascade refrigerant cycle also comprises a pressure relief valve connected in parallel to the compressor (250) and the expansion tank (251) in order to eliminate the excess pressure by releasing the cascade refrigerant fluid (202) into the expansion tank (251).

For example, said cascade refrigerant fluid (202) may be R13, R23, R508 or R744 which can condense at temperatures between -20 °C and -40 °C and evaporate at temperatures around -60 °C, in particular, a load of 8 kg can be used; said compressor (250) is hermetic, reciprocating, operated with a power of about 2 hp [1,47 kW] with an appropriate frequency variator to vary the speed of the compressor (250) as a function of the suction pressure, said expansion tank (251) is a tank with a capacity of about 20 liters, said liquid / oil separator (252) has 3/8" [9.53 mm] fluid connections with a capacity of 5 kg, said third heat exchanger (260) is a plate exchanger which condenses the cascade refrigerant fluid at a temperature between -20 °C and -40 °C, said liquid accumulator (270) with 7/8" [22.23 mm] fluid connections and a capacity up to 3.9 liters; said dehydrating filter (271) avoids moisture or impurity in the circuit and, for example, has a capacity for 5/8" [15.88 mm] fluid connection with flare connections for easily and regularly changing; and said liquid visor (272) for inspecting cascade refrigerant fluid (202) of the circuit has 5/8" [15.88 mm] fluid connection.

Preferably, said second fluid connection (303) of the cooling group (300) comprises a second control solenoid valve (307) and a second expansion valve (306) connected in series to the third heat exchanger (260) of the second group (200), delivering the cooling fluid (301) by expanding into the third heat exchanger (260) to withdraw heat from the cascade refrigerant cycle of the second recovery group (200), wherein said second control solenoid valve (307) is controlled by said control means (400).

Alternatively, said second fluid connection (303) of the cooling group (300) comprises a second expansion valve (306) connected to the third heat exchanger (260) of the second recovery group (200) which delivers the cooling fluid (301) expanding in the third heat exchanger (260) to withdraw heat from the cascade cooling cycle of the second recovery group (200), wherein said second expansion valve (306) is electronic and is controlled by said control means (400).

Alternatively, the expansion valve (306) is a manual valve.

According to a preferred aspect of the present invention, said cooling group (300) comprises a pressure modulator (310) connected by a first inlet to the first heat exchanger (120) of the first recovery group (100) and by a second input to the third heat exchanger (260) of the second recovery group (200).

Alternatively, said cooling group (300) comprises a pressure modulator (310) connected by a first inlet to the first heat exchanger (120) of the first recovery group (100) and by a second inlet to the second heat exchanger (260) of the second recovery group (200).

Alternatively, said cooling group (300) comprises a pressure modulator (310) connected by a first inlet to the first heat exchanger (120) of the first recovery group (100) and by a second inlet to the second condenser (210) of the second recovery group (200).

Preferably, said pressure modulator (310) is connected to a first suction trap (311) connected to a fourth heat exchanger (320) connected to a first compressor (330) connected to a first liquid / oil separator (331) connected to said fourth heat exchanger (320) forming a cooling loop that said cooling fluid (301) from the first suction trap (311) withdraws heat from the cooling fluid (301) from the first liquid / oil separator (331).

Preferably, said fourth heat exchanger (320) is connected to a first air cooled condenser (340) connected to a first liquid accumulator (350) connected to a first dehydrating filter (360) connected to a first liquid visor (370) connected, in a first branch, to said first fluid connection (302) forming a first refrigeration cycle of the cooling group (300) which withdraws heat from said first recovery group (100) and, in a second branch, to said second fluid connection (303) forming a second refrigeration cycle of the cooling group (300) which withdraws heat from said second recovery group (200) and in parallel with said first refrigeration cycle.

The pressure modulator (310) compensates for and maintains constant pressure of the flows returning from the heat exchangers of the first recovery group (100) and the second recovery group (200) operating at different temperatures and pressures in the first refrigeration cycle and second refrigeration cycle respectively, for delivering the cooling fluid (301) to the first compressor (330).

In addition, said first refrigeration cycle comprises a solenoid valve (380) connected in parallel to said fourth heat exchanger (320) and said first fluid connection (302) of the cooling group (300), wherein said solenoid valve (380) is controlled by said control means (400) allowing or restricting the flow of a hot gas from the first compressor (330) to defrost the equipment when necessary. For instance, by means of a scheduled defrosting cyclic program or a continuous census of the conditions of the equipment.

Also, said second refrigeration cycle comprises a second solenoid valve (not shown) connected in parallel to said fourth heat exchanger (320) and said second fluid connection (303) of the cooling group (300), wherein said second solenoid valve is controlled by said control means (400) allowing or restricting the flow of a hot gas from the first compressor (330) to defrost the equipment when necessary. For instance, by means of a scheduled defrosting cyclic program or a continuous census of the conditions of the equipment.

For example, said cooling fluid (301) may be Freon type R507a with a load of 11.3 kg; said pressure modulator (310) is mechanical or electronic; said first suction trap (311) with 7/8" [22.23 mm] connection; said fourth heat exchanger (320) is a plate exchanger; said first compressor (330) is hermetic and reciprocating, operated with a power of about 2.5 hp [1,84 kW] and with an appropriate frequency variator for varying its speed as a function of the suction pressure; said first liquid / oil separator (331) has 3/8" [9.53 mm] fluid connections; said first air - cooled condenser (340) is a 16 m² condenser with forced air, for an ambient temperature between 15 °C and 22 °C, and a mono-phase fan between 2.5 and 6 hp [4.41 kW]; said first liquid accumulator (350) with 7/8" [22.23 mm] fluid connections and a capacity of up to 3.9 liters; said first dehydrating filter (360) prevents moisture or impurity in the circuit and, for example, has a capacity for 5/8" [15.88 mm] fluid connection with flare connections for easily and regularly changing; said first liquid visor (370) for inspection of the cooling fluid (301) of the circuit has a fluid connection of 5/8" [15.88 mm].

According to another preferred aspect of the present invention, said cooling group (300) comprises said fourth heat exchanger (320) connected, on one hand, to said first heat exchanger (120) of the first recovery group (100) and on the other hand, to said first suction trap (311).

Alternatively, said cooling group (300) comprises said fourth heat exchanger (320) connected, on the one hand, to said first condenser (110) of the first recovery group (100) and, on the other hand, to said first suction trap (311).

Preferably, said first suction trap (311) is connected to said first compressor (330) connected to said first liquid / oil separator (331) connected to said fourth heat exchanger (320) forming a first cooling loop wherein said first cooling fluid (301) from the first recovery group (100) withdraw heat from the cooling fluid (301) from the first liquid / oil separator (331).

Preferably, said fourth heat exchanger (320) is connected to said first air cooled condenser (340) connected to said first liquid accumulator (350) connected to said first dehydrating filter (360) connected to said first liquid visor (370) connected to said first fluid connection (302) forming said first cooling cycle of the cooling group (300) which withdraws heat from said first recovery group (100).

In addition, said cooling group (300) comprises a fifth heat exchanger (325) connected, on one hand, to said third heat exchanger (260) of the second recovery group (200) and, on the other hand, to a second suction trap (315).

Alternatively, said cooling group (300) comprises said fifth heat exchanger (325) connected, on the one hand, to said second condenser (210) of the second recovery group (200) and, on the other hand, to said second suction trap (315).

Preferably, said second suction trap (315) is connected to a second compressor (335) connected to a second liquid / oil separator (336) connected to said fifth heat exchanger (325) forming a second cooling loop wherein said cooling fluid (301) from the second recovery group (200) withdraws heat from the cooling fluid (301) from the second liquid / oil separator (336).

Preferably, said fifth heat exchanger (325) is connected to a second air cooled condenser (345) connected to a second liquid accumulator (355) connected to a second dehydrating filter (365) connected to a second liquid visor (375) connected to said second fluid connection (303) forming a second cooling cycle of the cooling group (300) which withdraws heat from said second recovery group (200).

Said first cooling cycle and said second cooling cycle of the cooling group (300) are individual.

For example, said refrigerant fluid (301) may be Freon type R507a with a load of 11.3 kg; said first and second suction traps (311, 315) have 7/8" [22.23 mm] connection; said fourth and fifth heat exchangers (320, 325) are plate exchangers; said first and second compressors (330, 335) are hermetic and reciprocating, operated with a power of about 2.5 hp [1.84 kW] and with an appropriate frequency variator for varying their speed as a function of the suction pressure; said first and second liquid / oil separators (331, 336) have 3/8" [9.53 mm] fluid connections; said first and second air - cooled condensers (340, 345) are 16 m² condensers with forced air for an ambient temperature between 15 °C and 22 °C, and a mono-phase fan between 2.5 and 6 hp [1.84-4.41 kW]; said first and second liquid accumulators (350, 355) have 7/8" [22.23 mm] fluid connections and up to 3.9 liter capacity; said first and second dehydrating filters (360, 365) prevents moisture or impurity in the circuit and for example have a capacity for 5/8" [15.88 mm] fluid connection with flare connections for easily and regularly changing; said first and second liquid visors (370, 375) for inspection of refrigerant fluid (301) of the circuit have 5/8" [15.88 mm] fluid connection.

Said housing comprises displacement means such as for example mobile wheels.

In addition, the aroma recovery equipment of the present invention comprises at least one refrigeration manometer for monitoring pressures within the equipment, in the high and low pressure zones according to the pressures of the selected refrigerants, cooling and cascade refrigerants fluid, preferably four refrigeration manometers.

In addition, the aroma recovery equipment of the present invention comprises at least one adjustable pressure switch for high and low pressure of the equipment, preferably two adjustable pressure switches.

Additionally, the aroma recovery equipment of the present invention comprises through valves for closing the various cycles of the equipment, for example, 5/8" [15.88 mm] ball valves.

Preferably, it is understood that each electronic expansion valve includes a coil operative form performing the mechanical work of opening and closing said valve by its electronic activation.

Additionally, the aroma recovery equipment of the present invention comprises thermal insulation, aeroflex type, for coating the fluid connections and components through which the cooling, refrigerant and cascade refrigerant fluids flow (101, 201, 202, 301).

Preferably, the fluid connections of the aroma recovery equipment of the present invention are made of annealed copper pipes, in particular of 5/8", 7/8" and 1 1/8" [15.88, 22.23 and 28.58 mm] diameters, and non-toxic PVC hoses, for the first and second refrigerant fluids (101, 201) of ½", 3/8" and 1" [12.70, 9.53 and 25.40 mm] diameter.

Preferably, the components of the equipment are welded together.

According to one aspect of the invention, said control means (400) comprises, a first controller (410) configured to control the temperature of the first refrigerant fluid (101) of the first recovery group (100); a second controller (420) configured to control the temperature of the second refrigerant fluid (201) of the second recovery group (200); a third controller (430) configured to control the temperature of the cooling fluid (301) of the cooling group (300); a fourth controller (440) configured to control the temperature of the first refrigerant fluid (101). This fourth controller (440) prevents the second condenser (210) of aroma from lowering the temperature before the first condenser (110), by opening and closing the solenoid (307) of the first recovery group (100).

According to a preferred aspect of the invention, said control means (400) is configured in PLC and PID programmers incorporated in an electrical board, such that said first controller (410) varies the fan speed of the first air-cooled condenser (340) for varying the cooling capacity; said second controller (420) commands the passage of cooling fluid (301) through said second fluid connection means (303); said third controller (430) commands the passage of cooling fluid (301) through said first fluid connection means (302); said fourth controller (440) controls the passage of cooling fluid (301) by said second fluid connection means (303) according to the temperature recorded on the first condenser (110) to prevent the second condenser (210) from lowering its temperature before the first condenser (110) is at its working temperature, avoiding freezing problems in the equipment.

Additionally, the control means (400) may comprise sensors operatively connected to monitor the temperatures of each fluid (101, 201, 202, 301).

## Claims

1. An aroma recovery equipment from exhausted gases from fermentation vats, wherein it comprises:
a first recovery group (100) comprising a first condenser (110) operating at a first outlet gas temperature between 0 °C and - 15 °C and receiving the exhausted gases from fermentation vats, it condenses the aromas into a liquid recovered by an aroma outlet (111) for storing and then exhaust gases exhausted by a gas outlet (112) of the first recovery group (100), wherein said first recovery group (100) includes said first condenser (110) connected to a heat exchanger (120) connected to a pump (130) connected to a fluid tank (140) connected to said first condenser (110), forming a first cooling cycle operating with a first cooling fluid (101) withdrawing heat from the first condenser (110);
a second recovery group (200) comprising a second condenser (210) operating at a second outlet gas temperature between - 40 °C and - 60 °C and receives the gas exhausted from the gas outlet (112) of the first recovery group (100), it condenses aromas in a liquid recovered by a second output of aromas (211) for storing and then evacuates the gases exhausted from a gas outlet (212) of the recovery equipment, wherein said second recovery group (200) includes said second condenser (210) connected to a second heat exchanger (220) connected to a pump (230) connected to a fluid tank (240) connected to said second condenser (210), forming a second cooling cycle operating with a second cooling fluid (201) withdrawing heat from the second condenser (210);
a cooling group (300) to provide cold by a cooling fluid (301) to said first recovery group (100) via a first fluid connection means (302) and to said second recovery group (200) via a second fluid connection means (303); and
control means (400) configured to coordinately control the temperature of said first recovery group (100) and the temperature of said second recovery group (200); and
a housing with displacement means such as wheels.

2. The aroma recovery equipment according to claim 1, wherein said first fluid connection (302) of the cooling group (300) comprises a first expansion valve (304) connected to said first condenser (110), the first condenser (110) being of a flooded type and being cooled by expanding the cooling fluid (301) in said first condenser (110), wherein said first expansion valve (304) is electronically controlled by said control means (400), or wherein said first fluid connection (302) of the cooling group (300) comprises a first expansion valve (304) connected to the first heat exchanger (120) of the first recovery group (100), delivering the cooling fluid (301) expanding in the first heat exchanger (120) for removing heat from said first recovery group (100), wherein said first expansion valve (304) is electronic and is controlled by said control means (400).

3. The aroma recovery equipment according to claim 1, wherein said first fluid connection (302) of the cooling group (300) comprises a first control solenoid valve (305) and a first expansion valve (304) connected in series to said first condenser (110), the first condenser (110) being of a flooded type and being cooled by expanding the cooling fluid (301) in said first condenser (110), wherein said first control solenoid valve (305) is controlled by said control means (400), or wherein said first fluid connection (302) of the cooling group (300) comprises a first control solenoid valve (305) and a first expansion valve (304) connected in series to the first heat exchanger (120) of the first recovery group (100), delivering the cooling fluid (301) expanding in the first heat exchanger (120) for removing heat from said first recovery group (100), wherein said first control solenoid valve (305) is controlled by said control means (400).

4. The aroma recovery equipment according to claim 1, wherein said second fluid connection (303) of the cooling group (300) comprises a second expansion valve (306) connected to said second condenser (210) which is a flooded type and is cooled by expanding the cooling fluid (301) in said second condenser (210), wherein said second expansion valve (303) is electronically controlled by said control means (400), or wherein said second fluid connection (303) of the cooling group (300) comprises a second control solenoid valve (307) and a second expansion valve (306) connected in series to said second condenser (210) which is a flooded type and is cooled by expanding the refrigerant (301) in said second condenser (210), wherein said second control solenoid valve (307) is electronic and controlled by said control means (400).

5. The aroma recovery equipment according to claim 1, wherein said second recovery group (200) further comprises a compressor (250) and an expansion tank (251) in parallel, connected on one side to the second heat exchanger (220) on the other side to a liquid / oil separator (252) connected a third heat exchanger (260) connected to a liquid accumulator (270) connected to a dehydrating filter (271) connected to a liquid visor (272) connected to a control solenoid valve (280) connected to an expansion valve (281) connected to said second heat exchanger (220) forming a cascade refrigerant cycle operating with a cascade refrigerant fluid (202) that withdraws heat from the second cooling cycle, and wherein said cascade refrigerant cycle also comprises a pressure relief valve connected in parallel to the compressor (250) and the tank (251) so as to eliminate excess pressure releasing the cascade refrigerant fluid (202) to the tank (251).

6. - The aroma recovery according to claim 5, wherein said second fluid connection (303) of the cooling group (300) comprises a second control solenoid valve (307) and a second expansion valve (306) connected in series the third heat exchanger (260) of the second recovery group (200), delivering the cooling fluid (301) expanding in the third heat exchanger (260) for removing heat from the cascade refrigerant cycle of the second recovery group (200), wherein said second control solenoid valve (307) is controlled by said control means (400), or wherein second fluid connection (303) of the cooling group (300) comprises a second expansion valve (306) connected to the third heat exchanger (260) the second recovery group (200), which delivers the coolant fluid (301) expanding in the third heat exchanger (260) for removing heat from the cascade refrigerant cycle of the second recovery group (200), wherein said second expansion valve (306) is electronic and is controlled by said control means (400).

7. - The aroma recovery equipment according to claim 5, wherein said cooling group (300) comprises a pressure modulator (310) connected by a first input to the first heat exchanger (120) of the first recovery group (100) and a second input to the third heat exchanger (260) of the second recovery group (200), or wherein said cooling group (300) comprises a pressure modulator (310) connected by a first input to the first heat exchanger (120) of the first recovery group (100) and a second input to the second condenser (210) of the second recovery group (200), or wherein said cooling group (300) comprises a pressure modulator (310) connected by a first input to the first heat exchanger (120) of the first recovery group (100) and a second input to the second heat exchanger (220) of the second recovery group (200).

8. - The aroma recovery equipment according to claim 7, wherein said pressure modulator (310) is connected to a first suction trap (311) connected to a fourth heat exchanger (320) connected to a first compressor (330) connected to a first liquid / oil separator (331) connected to said fourth heat exchanger (320), and wherein said fourth heat exchanger (320) is connected to a first air-cooled condenser (340) connected to a first liquid accumulator (350) connected to a first dehydrating filter (360) connected to a first liquid visor (370) connected in a branched fashion, in a first branch, to said first fluid connection (302) forming a first cooling cycle of the cooling group (300) and, in a second branch, to said second fluid connection (303) forming a second refrigeration cycle of the cooling group (300).

9. - The aroma recovery equipment according to claim 8, wherein said first refrigeration cycle of the cooling group (300) comprises a solenoid valve (380) connected in parallel to said fourth heat exchanger (320) and said first fluid connection (302) of the cooling group (300), wherein said solenoid valve (380) is controlled by said control means (400) to allow or restrict the flow of hot gas from the first compressor (330) for deicing equipment.

10. - The aroma recovery equipment according to claim 8, wherein said second refrigeration cycle of the cooling group (300) comprises a second solenoid valve connected in parallel to said fourth heat exchanger (320) and said second fluid connection (303) of the cooling group (300), wherein said second solenoid valve is controlled by said control means (400) to allow or restrict the flow of hot gas from the first compressor (330) for deicing equipment.

11. - The aroma recovery equipment according to claim 8, wherein said fourth heat exchanger (320) is connected, on one hand, to said first condenser (110) of the first recovery group (100) and, on the other hand, to said first suction trap (311), or wherein said fourth heat exchanger (320) is connected, on one hand, to said first heat exchanger (120) of the first recovery group (100) and, on the other hand, to said first suction trap (311).

12. - The aroma recovery according to claim 11, wherein said first suction trap (311) is connected to said first compressor (330) connected to said first liquid / oil separator (331) connected to said fourth heat exchanger (320).

13. - The aroma recovery equipment according to claim 12, wherein said fourth heat exchanger (320) is connected to a first air-cooled condenser (340) connected to a first liquid accumulator (350) connected to a first dehydrating filter (360) connected to a first liquid visor (370) connected to a first fluid connection (302) forming said first refrigeration cycle of the cooling group (300) that removes heat to said first recovery group (100) .

14. - The aroma recovery equipment according to claim 8, wherein said cooling group (300) comprises a fifth heat exchanger (325) connected, on one hand, to said third heat exchanger (260) the second recovery group (200) and, on the other hand, to a second suction trap (315), or wherein said cooling group (300) comprises a fifth heat exchanger (325) connected, on one hand, to said second condenser (210) of the second recovery group (200) and, on the other hand, to a second suction trap (315), wherein said second suction trap (315) is connected to a second compressor (335) connected to a second liquid / oil separator (336) connected to said fifth heat exchanger (325) forming a second cooling loop, and said fifth heat exchanger (325) is connected to a second air-cooled condenser (345) connected to a second liquid accumulator (355) connected to a second dehydrating filter (365) connected to a second liquid visor (375) connected to said second fluid connection (303) forming a second refrigeration cycle of the cooling group (300), and wherein said first refrigeration cycle and said second refrigeration cycle of the cooling group (300) are individuals.

15. - The aroma recovery equipment according to claim 1, wherein said control means (400) comprises a first controller (410) configured to control the fluid temperature of the first recovery group (100); a second controller (420) configured to control the fluid temperature of the second recovery group (200); a third controller (430) configured to control the fluid temperature of the cooling group (300); fourth controller (440) configured to control the fluid temperature of the first recovery group (100), wherein said control means (400) are configured in PLC and PID programmers incorporated in an electrical panel, wherein said control means (400) are configured in PLC and PID programmers incorporated in an electrical panel, such that said first controller (410) varies the fan speed of the first air-cooled condenser (340) for varying the cooling capacity, and wherein said control means (400) are configured such that said second controller (420) controls the passage of the cooling fluid (301) by said second fluid connection (303); said third controller (430) controls the passage of cooling fluid (301) by said first fluid connection (302); said fourth controller (440) controls the passage of cooling fluid (301) by said second fluid connection (303) according to the temperature censed in the first condenser (110) to prevent that the second condenser (210) lower its temperature before that the first condenser (110) is at its working temperature, avoiding freezing problems in the equipment.

## Patentansprüche

1. Eine Vorrichtung zur Rückgewinnung von Aromen aus Abluftgasen von Fermentationsbehältern, umfassend:
eine erste Rückgewinnungsgruppe (100), die einen ersten Kondensator (110) umfasst, der bei einer ersten Austrittsgastemperatur zwischen 0 °C und -15 °C arbeitet und die Abluftgase aus den Fermentationsbehältern aufnimmt, wobei sie die Aromen zu einer Flüssigkeit kondensiert, die über einen Aromaauslass (111) zur Lagerung zurückgewonnen wird, und anschließend die Abluftgase über einen Gasauslass (112) der ersten Rückgewinnungsgruppe (100) abführt, wobei die erste Rückgewinnungsgruppe (100) den ersten Kondensator (110), der mit einem Wärmetauscher (120) verbunden ist, der mit einer Pumpe (130) verbunden ist, die mit einem Fluidbehälter (140) verbunden ist, der mit dem ersten Kondensator (110) verbunden ist, umfasst und dadurch einen ersten Kühlkreislauf bildet, der mit einem ersten Kühlfluid (101) betrieben wird, welches dem ersten Kondensator (110) Wärme entzieht;
eine zweite Rückgewinnungsgruppe (200), die einen zweiten Kondensator (210) umfasst, der bei einer zweiten Austrittsgastemperatur zwischen -40 °C und - 60 °C arbeitet und die Abluftgase vom Gasauslass (112) der ersten Rückgewinnungsgruppe (100) aufnimmt, wobei sie die Aromen zu einer Flüssigkeit kondensiert, die über einen zweiten Aromaauslass (211) zur Lagerung zurückgewonnen wird, und anschließend die Abluftgase über einen Gasauslass (212) der Rückgewinnungsvorrichtung abführt, wobei die zweite Rückgewinnungsgruppe (200) den zweiten Kondensator (210), der mit einem zweiten Wärmetauscher (220) verbunden ist, der mit einer Pumpe (230) verbunden ist, die mit einem Fluidbehälter (240) verbunden ist, der mit dem zweiten Kondensator (210) verbunden ist, umfasst und dadurch einen zweiten Kühlkreislauf bildet, der mit einem zweiten Kühlfluid (201) betrieben wird, welches dem zweiten Kondensator (210) Wärme entzieht;
eine Kühlgruppe (300) zum Bereitstellen von Kälte mittels eines Kühlfluids (301) für die erste Rückgewinnungsgruppe (100) über ein erstes Fluidverbindungsmittel (302) und für die zweite Rückgewinnungsgruppe (200) über ein zweites Fluidverbindungsmittel (303); und
Steuermittel (400), die dazu konfiguriert sind, die Temperatur der ersten Rückgewinnungsgruppe (100) und die Temperatur der zweiten Rückgewinnungsgruppe (200) koordiniert zu steuern; und
ein Gehäuse mit Fortbewegungsmitteln, wie etwa Rädern.

2. Die Vorrichtung zur Rückgewinnung von Aromen nach Anspruch 1, wobei das erste Fluidverbindungsmittel (302) der Kühlgruppe (300) ein erstes Expansionsventil (304) umfasst, das mit dem ersten Kondensator (110) verbunden ist, wobei der erste Kondensator (110) als überfluteter Kondensator ausgebildet ist und durch Expansion des Kühlfluids (301) in dem ersten Kondensator (110) gekühlt wird, wobei das erste Expansionsventil (304) elektronisch ist und durch die Steuermittel (400) gesteuert wird; oder wobei das erste Fluidverbindungsmittel (302) der Kühlgruppe (300) ein erstes Expansionsventil (304) umfasst, das mit dem ersten Wärmetauscher (120) der ersten Rückgewinnungsgruppe (100) verbunden ist und das Kühlfluid (301) zuführt, das sich in dem ersten Wärmetauscher (120) entspannt, um der ersten Rückgewinnungsgruppe (100) Wärme zu entziehen, wobei das erste Expansionsventil (304) elektronisch ist und durch die Steuermittel (400) gesteuert wird.

3. Die Vorrichtung zur Rückgewinnung von Aromen nach Anspruch 1, wobei das erste Fluidverbindungsmittel (302) der Kühlgruppe (300) ein erstes Steuermagnetventil (305) und ein erstes Expansionsventil (304) umfasst, die in Reihe mit dem ersten Kondensator (110) verbunden sind, wobei der erste Kondensator (110) als überfluteter Kondensator ausgebildet ist und durch Expansion des Kühlfluids (301) in dem ersten Kondensator (110) gekühlt wird, wobei das erste Steuermagnetventil (305) durch die Steuermittel (400) gesteuert wird; oder wobei das erste Fluidverbindungsmittel (302) der Kühlgruppe (300) ein erstes Steuermagnetventil (305) und ein erstes Expansionsventil (304) umfasst, die in Reihe mit dem ersten Wärmetauscher (120) der ersten Rückgewinnungsgruppe (100) verbunden sind und das Kühlfluid (301) zuführen, das sich in dem ersten Wärmetauscher (120) entspannt, um der ersten Rückgewinnungsgruppe (100) Wärme zu entziehen, wobei das erste Steuermagnetventil (305) durch die Steuermittel (400) gesteuert wird.

4. Die Vorrichtung zur Rückgewinnung von Aromen nach Anspruch 1, wobei das zweite Fluidverbindungsmittel (303) der Kühlgruppe (300) ein zweites Expansionsventil (306) umfasst, das mit dem zweiten Kondensator (210) verbunden ist, der als überfluteter Kondensator ausgebildet ist und durch Expansion des Kühlfluids (301) in dem zweiten Kondensator (210) gekühlt wird, wobei das zweite Expansionsventil (303) elektronisch ist und durch die Steuermittel (400) gesteuert wird; oder wobei das zweite Fluidverbindungsmittel (303) der Kühlgruppe (300) ein zweites Steuermagnetventil (307) und ein zweites Expansionsventil (306) umfasst, die in Reihe mit dem zweiten Kondensator (210) verbunden sind, der als überfluteter Kondensator ausgebildet ist und durch Expansion des Kühlfluids (301) in dem zweiten Kondensator (210) gekühlt wird, wobei das zweite Steuermagnetventil (307) elektronisch ist und durch die Steuermittel (400) gesteuert wird.

5. Die Vorrichtung zur Rückgewinnung von Aromen nach Anspruch 1, wobei die zweite Rückgewinnungsgruppe (200) ferner einen Kompressor (250) und einen Expansionsbehälter (251) aufweist, die parallel geschaltet und auf einer Seite mit dem zweiten Wärmetauscher (220) und auf der anderen Seite mit einem Flüssigkeits-/Ölabscheider (252) verbunden sind, der mit einem dritten Wärmetauscher (260) verbunden ist, der mit einem Flüssigkeitssammler (270) verbunden ist, der mit einem Trocknungsfilter (271) verbunden ist, der mit einem Flüssigkeitsschauglas (272) verbunden ist, das mit einem Steuermagnetventil (280) verbunden ist, das mit einem Expansionsventil (281) verbunden ist, das mit dem zweiten Wärmetauscher (220) verbunden ist, wodurch ein Kaskadenkältemittelkreislauf gebildet wird, der mit einem Kaskadenkältemittel (202) betrieben wird, das dem zweiten Kühlkreislauf Wärme entzieht; und wobei der Kaskadenkältemittelkreislauf ferner ein Druckentlastungsventil umfasst, das parallel zu dem Kompressor (250) und dem Expansionsbehälter (251) angeschlossen ist, um Überdruck abzubauen, indem Kaskadenkältemittel (202) in den Expansionsbehälter (251) abgelassen wird.

6. Die Vorrichtung zur Rückgewinnung von Aromen nach Anspruch 5, wobei das zweite Fluidverbindungsmittel (303) der Kühlgruppe (300) ein zweites Steuermagnetventil (307) und ein zweites Expansionsventil (306) umfasst, die in Reihe mit dem dritten Wärmetauscher (260) der zweiten Rückgewinnungsgruppe (200) verbunden sind und das Kühlfluid (301) zuführen, das sich in dem dritten Wärmetauscher (260) entspannt, um dem Kaskadenkältemittelkreislauf der zweiten Rückgewinnungsgruppe (200) Wärme zu entziehen, wobei das zweite Steuermagnetventil (307) durch die Steuermittel (400) gesteuert wird; oder wobei das zweite Fluidverbindungsmittel (303) der Kühlgruppe (300) ein zweites Expansionsventil (306) umfasst, das mit dem dritten Wärmetauscher (260) der zweiten Rückgewinnungsgruppe (200) verbunden ist und das Kühlfluid (301) zuführt, das sich in dem dritten Wärmetauscher (260) entspannt, um dem Kaskadenkältemittelkreislauf der zweiten Rückgewinnungsgruppe (200) Wärme zu entziehen, wobei das zweite Expansionsventil (306) elektronisch ist und durch die Steuermittel (400) gesteuert wird.

7. Die Vorrichtung zur Rückgewinnung von Aromen nach Anspruch 5, wobei die Kühlgruppe (300) einen Druckmodulator (310) umfasst, der mit einem ersten Eingang mit dem ersten Wärmetauscher (120) der ersten Rückgewinnungsgruppe (100) und mit einem zweiten Eingang mit dem dritten Wärmetauscher (260) der zweiten Rückgewinnungsgruppe (200) verbunden ist; oder wobei die Kühlgruppe (300) einen Druckmodulator (310) umfasst, der mit einem ersten Eingang mit dem ersten Wärmetauscher (120) der ersten Rückgewinnungsgruppe (100) und mit einem zweiten Eingang mit dem zweiten Kondensator (210) der zweiten Rückgewinnungsgruppe (200) verbunden ist; oder wobei die Kühlgruppe (300) einen Druckmodulator (310) umfasst, der mit einem ersten Eingang mit dem ersten Wärmetauscher (120) der ersten Rückgewinnungsgruppe (100) und mit einem zweiten Eingang mit dem zweiten Wärmetauscher (220) der zweiten Rückgewinnungsgruppe (200) verbunden ist.

8. Die Vorrichtung zur Rückgewinnung von Aromen nach Anspruch 7, wobei der Druckmodulator (310) mit einem ersten Saugabscheider (311) verbunden ist, der mit einem vierten Wärmetauscher (320) verbunden ist, der mit einem ersten Kompressor (330) verbunden ist, der mit einem ersten Flüssigkeits-/Ölabscheider (331) verbunden ist, der mit dem vierten Wärmetauscher (320) verbunden ist; und wobei der vierte Wärmetauscher (320) mit einem ersten luftgekühlten Kondensator (340) verbunden ist, der mit einem ersten Flüssigkeitssammler (350) verbunden ist, der mit einem ersten Trocknungsfilter (360) verbunden ist, der mit einem ersten Flüssigkeitsschauglas (370) verbunden ist, das verzweigt in einem ersten Zweig mit dem ersten Fluidverbindungsmittel (302) verbunden ist und einen ersten Kühlkreislauf der Kühlgruppe (300) bildet und in einem zweiten Zweig mit dem zweiten Fluidverbindungsmittel (303) verbunden ist und einen zweiten Kühlkreislauf der Kühlgruppe (300) bildet.

9. Die Vorrichtung zur Rückgewinnung von Aromen nach Anspruch 8, wobei der erste Kühlkreislauf der Kühlgruppe (300) ein Magnetventil (380) umfasst, das parallel zu dem vierten Wärmetauscher (320) und dem ersten Fluidverbindungsmittel (302) der Kühlgruppe (300) geschaltet ist, wobei das Magnetventil (380) durch die Steuermittel (400) gesteuert wird, um den Heißgasstrom vom ersten Kompressor (330) zum Abtauen der Vorrichtung zuzulassen oder zu sperren.

10. Die Vorrichtung zur Rückgewinnung von Aromen nach Anspruch 8, wobei der zweite Kühlkreislauf der Kühlgruppe (300) ein zweites Magnetventil umfasst, das parallel zu dem vierten Wärmetauscher (320) und dem zweiten Fluidverbindungsmittel (303) der Kühlgruppe (300) geschaltet ist, wobei das zweite Magnetventil durch die Steuermittel (400) gesteuert wird, um den Heißgasstrom vom ersten Kompressor (330) zum Abtauen der Vorrichtung zuzulassen oder zu sperren.

11. Die Vorrichtung zur Rückgewinnung von Aromen nach Anspruch 8, wobei der vierte Wärmetauscher (320) einerseits mit dem ersten Kondensator (110) der ersten Rückgewinnungsgruppe (100) und andererseits mit dem ersten Saugabscheider (311) verbunden ist; oder wobei der vierte Wärmetauscher (320) einerseits mit dem ersten Wärmetauscher (120) der ersten Rückgewinnungsgruppe (100) und andererseits mit dem ersten Saugabscheider (311) verbunden ist.

12. Die Vorrichtung zur Rückgewinnung von Aromen nach Anspruch 11, wobei der erste Saugabscheider (311) mit dem ersten Kompressor (330) verbunden ist, der mit dem ersten Flüssigkeits-/Ölabscheider (331) verbunden ist, der mit dem vierten Wärmetauscher (320) verbunden ist.

13. Die Vorrichtung zur Rückgewinnung von Aromen nach Anspruch 12, wobei der vierte Wärmetauscher (320) mit einem ersten luftgekühlten Kondensator (340) verbunden ist, der mit einem ersten Flüssigkeitssammler (350) verbunden ist, der mit einem ersten Trocknungsfilter (360) verbunden ist, der mit einem ersten Flüssigkeitsschauglas (370) verbunden ist, das mit einem ersten Fluidverbindungsmittel (302) verbunden ist und den ersten Kühlkreislauf der Kühlgruppe (300) bildet, der der ersten Rückgewinnungsgruppe (100) Wärme entzieht.

14. Die Vorrichtung zur Rückgewinnung von Aromen nach Anspruch 8, wobei die Kühlgruppe (300) einen fünften Wärmetauscher (325) umfasst, der einerseits mit dem dritten Wärmetauscher (260) der zweiten Rückgewinnungsgruppe (200) und andererseits mit einem zweiten Saugabscheider (315) verbunden ist; oder wobei die Kühlgruppe (300) einen fünften Wärmetauscher (325) umfasst, der einerseits mit dem zweiten Kondensator (210) der zweiten Rückgewinnungsgruppe (200) und andererseits mit einem zweiten Saugabscheider (315) verbunden ist, wobei der zweite Saugabscheider (315) mit einem zweiten Kompressor (335) verbunden ist, der mit einem zweiten Flüssigkeits-/Ölabscheider (336) verbunden ist, der mit dem fünften Wärmetauscher (325) verbunden ist und einen zweiten Kühlkreis bildet, und wobei der fünfte Wärmetauscher (325) mit einem zweiten luftgekühlten Kondensator (345) verbunden ist, der mit einem zweiten Flüssigkeitssammler (355) verbunden ist, der mit einem zweiten Trocknungsfilter (365) verbunden ist, der mit einem zweiten Flüssigkeitsschauglas (375) verbunden ist, das mit dem zweiten Fluidverbindungsmittel (303) verbunden ist und einen zweiten Kühlkreislauf der Kühlgruppe (300) bildet, wobei der erste Kühlkreislauf und der zweite Kühlkreislauf der Kühlgruppe (300) voneinander unabhängig sind.

15. Die Vorrichtung zur Rückgewinnung von Aromen nach Anspruch 1, wobei die Steuermittel (400) einen ersten Regler (410), der dazu konfiguriert ist, die Temperatur des ersten Kühlfluids (101) der ersten Rückgewinnungsgruppe (100) zu steuern; einen zweiten Regler (420), der dazu konfiguriert ist, die Temperatur des zweiten Kühlfluids (201) der zweiten Rückgewinnungsgruppe (200) zu steuern; einen dritten Regler (430), der dazu konfiguriert ist, die Temperatur des Kühlfluids (301) der Kühlgruppe (300) zu steuern; und einen vierten Regler (440), der dazu konfiguriert ist, die Temperatur des ersten Kühlfluids (101) zu steuern, umfassen, wobei die Steuermittel (400) in SPS- und PID-Reglern implementiert sind, die in einer elektrischen Schalttafel integriert sind, wobei die Steuermittel (400) in SPS- und PID-Reglern implementiert sind, die in einer elektrischen Schalttafel integriert sind, sodass der erste Regler (410) die Lüfterdrehzahl des ersten luftgekühlten Kondensators (340) verändert, um die Kühlleistung zu verändern, und wobei die Steuermittel (400) derart konfiguriert sind, dass der zweite Regler (420) den Durchfluss des Kühlfluids (301) durch das zweite Fluidverbindungsmittel (303) steuert; der dritte Regler (430) den Durchfluss des Kühlfluids (301) durch das erste Fluidverbindungsmittel (302) steuert; und der vierte Regler (440) den Durchfluss des Kühlfluids (301) durch das zweite Fluidverbindungsmittel (303) entsprechend der im ersten Kondensator (110) gemessenen Temperatur steuert, um zu verhindern, dass der zweite Kondensator (210) seine Temperatur absenkt, bevor der erste Kondensator (110) seine Betriebstemperatur erreicht hat, wodurch Gefrierprobleme in der Vorrichtung vermieden werden.

## Revendications

1. Un équipement de récupération d'arômes à partir de gaz évacués provenant de cuves de fermentation, comprenant:
un premier groupe de récupération (100) comprenant un premier condenseur (110) fonctionnant à une première température de gaz de sortie entre 0 °C et - 15 °C et recevant les gaz évacués des cuves de fermentation, condensant les arômes en un liquide récupéré par une sortie d'arômes (111) pour le stockage puis évacuant les gaz par une sortie de gaz (112) du premier groupe de récupération (100), où ledit premier groupe de récupération (100) comprend ledit premier condenseur (110) connecté à un échangeur de chaleur (120) connecté à une pompe (130) connectée à un réservoir de fluide (140) connecté audit premier condenseur (110), formant un premier cycle frigorifique fonctionnant avec un premier fluide frigorigène (101) évacuant la chaleur du premier condenseur (110) ;
un second groupe de récupération (200) comprenant un second condenseur (210) fonctionnant à une seconde température de gaz de sortie entre - 40 °C et - 60 °C et recevant les gaz évacués par la sortie de gaz (112) du premier groupe de récupération (100), condensant les arômes en un liquide récupéré par une seconde sortie d'arômes (211) pour le stockage puis évacuant les gaz par une sortie de gaz (212) de l'équipement de récupération, où ledit second groupe de récupération (200) comprend ledit second condenseur (210) connecté à un second échangeur de chaleur (220) connecté à une pompe (230) connectée à un réservoir de fluide (240) connecté audit second condenseur (210), formant un second cycle frigorifique fonctionnant avec un second fluide frigorigène (201) évacuant la chaleur du second condenseur (210) ;
un groupe frigorifique (300) pour fournir du froid au moyen d'un fluide frigorigène (301) audit premier groupe de récupération (100) via un premier moyen de raccordement fluidique (302) et audit second groupe de récupération (200) via un second moyen de raccordement fluidique (303) ; et
des moyens de commande (400) configurés pour contrôler de manière coordonnée la température dudit premier groupe de récupération (100) et la température dudit second groupe de récupération (200) ; et
un boîtier muni de moyens de déplacement tels que des roues.

2. L'équipement de récupération d'arômes selon la revendication 1, où ledit premier raccordement fluidique (302) du groupe frigorifique (300) comprend une première vanne d'expansion (304) connectée audit premier condenseur (110), le premier condenseur (110) étant de type noyé et étant refroidi par l'expansion du fluide frigorigène (301) dans ledit premier condenseur (110), où ladite première vanne d'expansion (304) est contrôlée électroniquement par lesdits moyens de commande (400), ou où ledit premier raccordement fluidique (302) du groupe frigorifique (300) comprend une première vanne d'expansion (304) connectée au premier échangeur de chaleur (120) du premier groupe de récupération (100), délivrant le fluide frigorigène (301) se détendant dans le premier échangeur de chaleur (120) pour évacuer la chaleur dudit premier groupe de récupération (100), où ladite première vanne d'expansion (304) est électronique et est contrôlée par lesdits moyens de commande (400).

3. L'équipement de récupération d'arômes selon la revendication 1, où ledit premier raccordement fluidique (302) du groupe frigorifique (300) comprend une première électrovanne de commande (305) et une première vanne d'expansion (304) connectées en série audit premier condenseur (110), le premier condenseur (110) étant de type noyé et étant refroidi par l'expansion du fluide frigorigène (301) dans ledit premier condenseur (110), où ladite première électrovanne de commande (305) est contrôlée par lesdits moyens de commande (400), ou où ledit premier raccordement fluidique (302) du groupe frigorifique (300) comprend une première électrovanne de commande (305) et une première vanne d'expansion (304) connectées en série au premier échangeur de chaleur (120) du premier groupe de récupération (100), délivrant le fluide frigorigène (301) se détendant dans le premier échangeur de chaleur (120) pour évacuer la chaleur dudit premier groupe de récupération (100), où ladite première électrovanne de commande (305) est contrôlée par lesdits moyens de commande (400).

4. L'équipement de récupération d'arômes selon la revendication 1, où ledit second raccordement fluidique (303) du groupe frigorifique (300) comprend une seconde vanne d'expansion (306) connectée audit second condenseur (210) qui est de type noyé et est refroidi par l'expansion du fluide frigorigène (301) dans ledit second condenseur (210), où ladite seconde vanne d'expansion (303) est contrôlée électroniquement par lesdits moyens de commande (400), ou où ledit second raccordement fluidique (303) du groupe frigorifique (300) comprend une seconde électrovanne de commande (307) et une seconde vanne d'expansion (306) connectées en série audit second condenseur (210) qui est de type noyé et est refroidi par l'expansion du fluide frigorigène (301) dans ledit second condenseur (210), où ladite seconde électrovanne de commande (307) est électronique et contrôlée par lesdits moyens de commande (400).

5. L'équipement de récupération d'arômes selon la revendication 1, où ledit second groupe de récupération (200) comprend en outre un compresseur (250) et un vase d'expansion (251) en parallèle, connectés d'un côté à l'échangeur de chaleur (220) et de l'autre côté à un séparateur liquide/huile (252) connecté à un troisième échangeur de chaleur (260) connecté à un accumulateur de liquide (270) connecté à un filtre déshydratant (271) connecté à un voyant de liquide (272) connecté à une électrovanne de commande (280) connectée à une vanne d'expansion (281) connectée audit second échangeur de chaleur (220) formant un cycle frigorifique en cascade fonctionnant avec un fluide frigorigène en cascade (202) qui évacue la chaleur du second cycle frigorifique, et où ledit cycle frigorifique en cascade comprend également une soupape de décharge connectée en parallèle au compresseur (250) et au vase d'expansion (251) afin d'éliminer l'excès de pression en libérant le fluide frigorigène en cascade (202) dans le vase d'expansion (251).

6. L'équipement de récupération d'arômes selon la revendication 5, où ledit second raccordement fluidique (303) du groupe frigorifique (300) comprend une seconde électrovanne de commande (307) et une seconde vanne d'expansion (306) connectées en série au troisième échangeur de chaleur (260) du second groupe de récupération (200), délivrant le fluide frigorigène (301) se détendant dans le troisième échangeur de chaleur (260) pour évacuer la chaleur du cycle frigorifique en cascade du second groupe de récupération (200), où ladite seconde électrovanne de commande (307) est contrôlée par lesdits moyens de commande (400), ou où ledit second raccordement fluidique (303) du groupe frigorifique (300) comprend une seconde vanne d'expansion (306) connectée au troisième échangeur de chaleur (260) du second groupe de récupération (200), qui délivre le fluide frigorigène (301) se détendant dans le troisième échangeur de chaleur (260) pour évacuer la chaleur du cycle frigorifique en cascade du second groupe de récupération (200), où ladite seconde vanne d'expansion (306) est électronique et est contrôlée par lesdits moyens de commande (400).

7. L'équipement de récupération d'arômes selon la revendication 5, dans lequel ledit groupe frigorifique (300) comprend un modulateur de pression (310) connecté par une première entrée au premier échangeur de chaleur (120) du premier groupe de récupération (100) et une seconde entrée au troisième échangeur de chaleur (260) du second groupe de récupération (200), ou dans lequel ledit groupe frigorifique (300) comprend un modulateur de pression (310) connecté par une première entrée au premier échangeur de chaleur (120) du premier groupe de récupération (100) et une seconde entrée au second condenseur (210) du second groupe de récupération (200), ou dans lequel ledit groupe frigorifique (300) comprend un modulateur de pression (310) connecté par une première entrée au premier échangeur de chaleur (120) du premier groupe de récupération (100) et une seconde entrée au second échangeur de chaleur (220) du second groupe de récupération (200).

8. L'équipement de récupération d'arômes selon la revendication 7, dans lequel ledit modulateur de pression (310) est connecté à un premier piège d'aspiration (311) connecté à un quatrième échangeur de chaleur (320) connecté à un premier compresseur (330) connecté à un premier séparateur liquide/huile (331) connecté audit quatrième échangeur de chaleur (320), et dans lequel ledit quatrième échangeur de chaleur (320) est connecté à un premier condenseur refroidi par air (340) connecté à un premier accumulateur de liquide (350) connecté à un premier filtre déshydratant (360) connecté à un premier voyant de liquide (370) connecté de manière ramifiée, dans une première branche, à ladite premier raccordement fluidique (302) formant un premier cycle frigorifique du groupe frigorifique (300) et, dans une seconde branche, à ladite second raccordement fluidique (303) formant un second cycle frigorifique du groupe frigorifique (300).

9. L'équipement de récupération d'arômes selon la revendication 8, dans lequel ledit premier cycle frigorifique du groupe frigorifique (300) comprend une électrovanne (380) connectée en parallèle audit quatrième échangeur de chaleur (320) et à ladite premier raccordement fluidique (302) du groupe frigorifique (300), dans lequel ladite électrovanne (380) est contrôlée par lesdits moyens de commande (400) pour permettre ou restreindre l'écoulement de gaz chaud provenant du premier compresseur (330) pour dégivrer l'équipement.

10. L'équipement de récupération d'arômes selon la revendication 8, dans lequel ledit second cycle frigorifique du groupe frigorifique (300) comprend une seconde électrovanne connectée en parallèle audit quatrième échangeur de chaleur (320) et à ladite second raccordement fluidique (303) du groupe frigorifique (300), dans lequel ladite seconde électrovanne est contrôlée par lesdits moyens de commande (400) pour permettre ou restreindre l'écoulement de gaz chaud provenant du premier compresseur (330) pour dégivrer l'équipement.

11. L'équipement de récupération d'arômes selon la revendication 8, dans lequel ledit quatrième échangeur de chaleur (320) est connecté, d'une part, audit premier condenseur (110) du premier groupe de récupération (100) et, d'autre part, audit premier piège d'aspiration (311), ou dans lequel ledit quatrième échangeur de chaleur (320) est connecté, d'une part, audit premier échangeur de chaleur (120) du premier groupe de récupération (100) et, d'autre part, audit premier piège d'aspiration (311).

12. L'équipement de récupération d'arômes selon la revendication 11, dans laquelle ledit premier piège d'aspiration (311) est connecté audit premier compresseur (330) connecté audit premier séparateur liquide/huile (331) connecté audit quatrième échangeur de chaleur (320).

13. L'équipement de récupération d'arômes selon la revendication 12, dans lequel ledit quatrième échangeur de chaleur (320) est connecté à un premier condenseur refroidi par air (340) connecté à un premier accumulateur de liquide (350) connecté à un premier filtre déshydratant (360) connecté à un premier voyant de liquide (370) connecté à un premier raccordement fluidique (302) formant ledit premier cycle frigorifique du groupe frigorifique (300) qui évacue la chaleur dudit premier groupe de récupération (100).

14. L'équipement de récupération d'arômes selon la revendication 8, dans lequel ledit groupe frigorifique (300) comprend un cinquième échangeur de chaleur (325) connecté, d'une part, au troisième échangeur de chaleur (260) du second groupe de récupération (200) et, d'autre part, à un second piège d'aspiration (315), ou dans lequel ledit groupe frigorifique (300) comprend un cinquième échangeur de chaleur (325) connecté, d'une part, au second condenseur (210) du second groupe de récupération (200) et, d'autre part, à un second piège d'aspiration (315), dans lequel ledit second piège d'aspiration (315) est connecté à un second compresseur (335) connecté à un second séparateur liquide/huile (336) connecté audit cinquième échangeur de chaleur (325) formant une seconde boucle de refroidissement, et ledit cinquième échangeur de chaleur (325) est connecté à un second condenseur refroidi par air (345) connecté à un second accumulateur de liquide (355) connecté à un second filtre déshydratant (365) connecté à un second voyant de liquide (375) connecté à ladite second raccordement fluidique (303) formant un second cycle frigorifique du groupe frigorifique (300), et dans lequel ledit premier cycle frigorifique et ledit second cycle frigorifique du groupe frigorifique (300) sont individuels.

15. L'équipement de récupération d'arômes selon la revendication 1, dans lequel lesdits moyens de commande (400) comprennent un premier contrôleur (410) configuré pour contrôler la température du fluide du premier groupe de récupération (100) ; un second contrôleur (420) configuré pour contrôler la température du fluide du second groupe de récupération (200) ; un troisième contrôleur (430) configuré pour contrôler la température du fluide du groupe frigorifique (300) ; un quatrième contrôleur (440) configuré pour contrôler la température du fluide du premier groupe de récupération (100), dans lequel lesdits moyens de commande (400) sont configurés dans des automates PLC et des régulateurs PID incorporés dans un panneau électrique, dans lequel lesdits moyens de commande (400) sont configurés dans des automates PLC et des régulateurs PID incorporés dans un panneau électrique, de sorte que ledit premier contrôleur (410) varie la vitesse du ventilateur du premier condenseur refroidi par air (340) pour varier la capacité de refroidissement, et dans lequel lesdits moyens de commande (400) sont configurés de sorte que ledit second contrôleur (420) contrôle le passage du fluide frigorigène (301) par ladite second raccordement fluidique (303) ; ledit troisième contrôleur (430) contrôle le passage du fluide frigorigène (301) par ladite premier raccordement fluidique (302) ; ledit quatrième contrôleur (440) contrôle le passage du fluide frigorigène (301) par ladite second raccordement fluidique (303) selon la température mesurée dans le premier condenseur (110) pour empêcher que le second condenseur (210) ne baisse sa température avant que le premier condenseur (110) ne soit à sa température de fonctionnement, évitant ainsi des problèmes de gel dans l'équipement.
